# EUROPEAN PATENT APPLICATION

(11) **EP 3 399 439 A1**
(43) Date of publication of application: **07.11.2018**
(21) Application number: 17173298.5
(22) Date of filing: 29.05.2017
(51) Int. Cl.: G06F 17/30

(54) **METHOD FOR RECOMMENDING MUSIC IN PLAYLIST AND APPARATUS USING THE SAME**

(30) Priority: 04.05.2017 KR 20170056875
(71) Applicant: Buzzmusiq Inc., Santa Monica, CA 90401 (US)
(72) Inventor: LEE, Jung Suk, 05364 Seoul (KR); CHOI, Keun Woo, 11141 Gyeonggi-do (KR); KIM, Tae Hoon, 06102 Seoul (KR); GYEONG, Guk Hyeon, 13306 Gyeonggi-do (KR); HER, Uk, 06130 Seoul (KR); LEE, Sung Ho, 07237 Seoul (KR)
(74) Representative: Fabry, Bernd

(57) **Abstract**

Disclosed herein is a method for recommending music in a playlist. The method includes: receiving at least one selection track; determining at least one recommended track for the received selection track by using an engine, the engine configured to predict a track to be played next among potential tracks based on an order of tracks in a playlist; and providing the at least one determined recommended track.

## Description

### BACKGROUND

### Technical Field

The present disclosure relates to a method for recommending music in a playlist, and a device using the same.

### Description of the Related Art

There are a variety of ways to listen to streaming music via applications. Basically, a user may select music tracks she/he wants in a music streaming application and listen to the selected music tracks. Alternatively, the user may listen to music tracks by selecting a playlist including one or more music tracks prepared in advance by another user or in a music application.

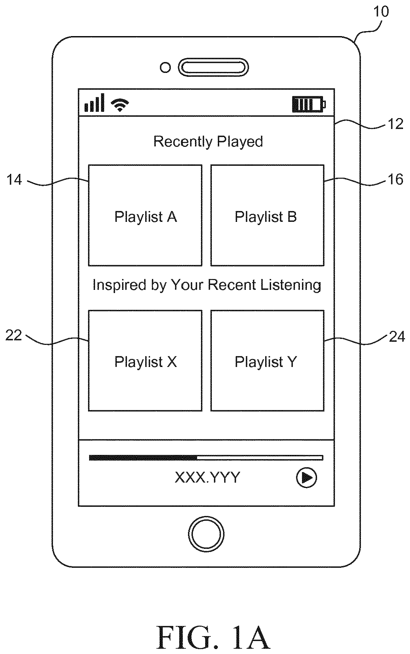

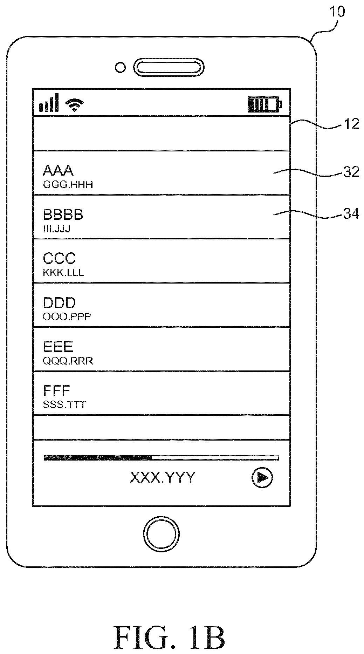

For example, FIGS. 1A and 1B are views showing existing devices for providing music playlists. Referring to FIG. 1A, an existing mobile device 10 is shown on which a music streaming application is running. The mobile device 10 includes a display unit 12 for graphically presenting a music streaming application. The display unit 12 may display playlists A and B (14 and 16) which are played recently, and playlists X and Y (22 and 24) which are recommended based on the recently played music tracks. FIG. 1B shows a page after one of the displayed playlists has been selected. Once one of the playlists is selected, the information on the music tracks 32 and 34 included in the playlist may be displayed.

The playlists in FIGS. 1A and 1B are provided in a variety of ways. First, the playlists may be created with tracks selected by a user. This is the most commonly used way. The user listens to or search for music and configures a playlist by adding a track to the playlist. In this way, there is a shortcoming in that only the tracks recognized by the user are included in the playlist, and thus the user has few chances to encounter new music. To overcome such a shortcoming and to allow a user to listen to music more conveniently from a playlist including various and new tracks, playlists created by other users can be shared. For example, a playlist including tracks selected by a music streaming service provider may be provided. Such an approach has the advantage in that new and continuously updated playlists are provided. Unfortunately, such a playlist may include tracks that the user does not want, and similar tracks may be included in a plurality of playlists, which may degrade the user experience. Further, playlists such as the playlist X (22) of FIG. 1A may be recommended based on the recently listened music. Again, however, such a playlist may include tracks that the user does not want, thus it is difficult to create a playlist that is new and satisfies the user experience.

The statements in this section merely provide background information related to the present disclosure and may not constitute prior art.

### SUMMARY

The inventors of the application have found that if a track a user wants to be played next can be predicted based on the user's tendency among a plurality of potential tracks, it is possible to provide new music while satisfying the user's taste in creating a playlist.

In view of the above, the inventors of the application have devised an engine for predicting a track to be played next among a variety of potential track based on the order in which tracks in the playlist of the user are played and on the initially selected tracks.

Accordingly, an object of the present disclosure is to provide a method for recommending music in a playlist, by which a playlist including only tracks the user wants can be created by recommending a track that can satisfy the user's taste more accurately only if the user selects a track, and a device using the same.

Another object of the present disclosure is to provide a method for recommending music in a playlist, by which tracks that the user does not want are not recommended while tracks similar to the selected tracks are recommended based on the user's behavior pattern, and a device using the same.

It should be noted that objects of the present disclosure are not limited to the above-described objects, and other objects of the present disclosure will be apparent to those skilled in the art from the following descriptions.

According to an aspect of the present disclosure, there is provided a method for recommending music in a playlist. The method includes: receiving at least one selection track; determining at least one recommended track for the received selection track by using an engine, the engine configured to predict a track to be played next among potential tracks based on an order of tracks in a playlist; and providing the at least one determined recommended track.

The method may further include: before the determining the at least one recommended track, receiving tracks in at least one playlist collected from a device, wherein the determining the at least one recommended tracks comprises: determining at least one recommended track for the received selection track by using the engine, based further on an order in which the tracks are played or created in the at least one playlist.

The method may further include mapping the tracks in the received, at least one playlist to the potential tracks.

If the tracks in the at least one playlist exist in the potential tracks, the tracks in the at least one playlist are mapped to the potential tracks, and wherein the mapping comprises converting the tracks into embedded tracks and mapping between the embedded tracks.

The method may further include converting the tracks in the at least one playlist into vectors if the tracks in the at least one playlist do no exist in the potential tracks; and mapping the tracks in the at least one playlist to some of the potential tracks that have vectors closest to the converted vectors.

The tracks to be converted may be tracks stored in a cache or tracks received from a streaming server upon request.

The method may further include: before the determining the at least one recommended track, receiving non-preferred tracks determined based on a user's behavior pattern, wherein the determining the at least one recommended tracks comprises: determining at least one recommended track for the received selection track by using the engine, based further on the non-preferred tracks.

The user's behavior pattern may be one of removing a track from a playlist, skipping a track to a next track before a predetermined period of time elapses, and rating a track below a predetermined rating.

The method may further include: converting the received selection track to an embedded audio, wherein the determining the at least one recommended track comprises: calculating a distance between the converted embedded audio and each of embedded audios of the potential tracks, and wherein at least one recommended track for the received selection track is determined by using the engine, based further on the calculated distance.

The determining the at least one recommended track may include: calculating a distance between the selection track and each of the potential tracks in term of at least one of artist, genre and release year, and wherein at least one recommended track for the received selection track is determined by using the engine, based further on the calculated distance.

In the engine configured to predict a track to be played next among the potential tracks based on the order of the track in the playlist, each of the potential tracks may be represented by one vector, and the value of the vector may be set to be closer if tracks appear consecutively in the playlist while the value of the vector may be set to be more distant if tracks do not appear consecutively in the playlist.

The engine configured to predict a track to be played next among the potential tracks based on the order of the track in the playlist may be learnt based on a plurality of playlists received from a music streaming server.

The method may further include: calculating a distance between the selection track and each of the potential tracks in term of at least one of artist, genre and release year; and determining at least one additional recommended track with respect to the recommended track based on the calculated distance, and the providing the recommended track may include providing the recommended track along with the additional recommended track.

According to another aspect of the present disclosure, there is provided a device for recommending music in a playlist. The device includes: a communications unit configured to receive at least one selection track; a processor operably connected to the communications unit and configured to : acquire the at least one selection track from the communications unit; and determine at least one recommended track for the received selection track using an engine, the engine configured to predict a track to be played next among potential tracks based on an order of tracks in the playlist; a display unit configured to display the at least one recommended track; and a touch input unit configured to select the at least one recommended track displayed on the display unit.

The communications unit may be further configured to: receive tracks in at least one playlist collected from a device before the processor determines the at least one recommended track, and the processor determines the at least one recommended tracks by determining at least one recommended track for the received selection track by using the engine, based further on an order in which the tracks are played or created in the at least one playlist.

The processor may be further configured to: map the tracks in the received, at least one playlist to the potential tracks.

The processor may receive non-preferred tracks determined based on a user's behavior pattern before it determines the at least one recommended track, and the processor may determine the at least one recommended tracks by determining at least one recommended track for the received selection track by using the engine, based further on the non-preferred tracks .

The determining the at least one recommended track may be carried out by: calculating a distance between the selection track and the potential tracks in term of at least one of artist, genre and release year, and determining at least one recommended track for the received selection track by using the engine based further on the calculated distance.

According to an exemplary embodiment of the present disclosure, by recommending a track that can more accurately satisfy a user's taste, a playlist can be created that includes tracks the user wants, tracks the user is likely to want, or tracks of the user's taste even though she/he did not recognized.

According to another exemplary embodiment of the present disclosure, a track that the user does not want is not recommended while a track most similar to the selected tracks is recommended based on the user's behavior pattern.

It should be noted that effects of the present disclosure are not limited to those described above and other effects of the present disclosure will be apparent to those skilled in the art from the following descriptions.

### BRIEF DESCRIPTION OF THE DRAWINGS

The above and other aspects, features and other advantages of the present disclosure will be more clearly understood from the following detailed description taken in conjunction with the accompanying drawings, in which:
FIGS. 1A and 1B are views showing an existing method for providing music playlists;
FIG. 2 is a view for illustrating a device for recommending music in a playlist according to an exemplary embodiment of the present disclosure;
FIG. 3 is a block diagram for illustrating a method for recommending music in a playlist according to an exemplary embodiment of the present disclosure;
FIG. 4 is a flowchart for illustrating a method for recommending music in a playlist according to an exemplary embodiment of the present disclosure;
FIGS. 5A-5D are views for illustrating an user interface according to a method for recommending music in a playlist according to an exemplary embodiment of the present disclosure;
FIG. 6 is a flowchart for illustrating a method for recommending music in a playlist according to another exemplary embodiment of the present disclosure;
FIG. 7 is a view for illustrating steps of mapping a playlist and receiving a recommended track among embedded tracks in a method for recommending music in a playlist according to another exemplary embodiment of the present disclosure;
FIG. 8A is a view for illustrating learning by the engine in the method for recommending music in a playlist according to another exemplary embodiment of the present disclosure; and
FIG. 8B is a view for illustrating more easily how the engine recommends tracks in the method for recommending music in a playlist according to another exemplary embodiment of the present disclosure.

### DETAILED DESCRIPTION OF THE PREFERRED EMBODIMENT

Advantages and features of the present disclosure and methods to achieve them will become apparent from the descriptions of exemplary embodiments hereinbelow with reference to the accompanying drawings. However, the present disclosure is not limited to exemplary embodiments disclosed herein but may be implemented in various different ways. The exemplary embodiments are provided for making the disclosure of the present disclosure thorough and for fully conveying the scope of the present disclosure to those skilled in the art. It is to be noted that the scope of the present disclosure is defined only by the claims.

Although terms such as first, second, etc. are used to distinguish arbitrarily between the elements such terms describe and these terms are not necessarily intended to indicate temporal or other prioritization of such elements. Theses terms are used to merely distinguish one element from another. Accordingly, as used herein, a first element may be a second element within the technical scope of the present invention.

Like reference numerals denote like elements throughout the descriptions.

Features of various exemplary embodiments of the present disclosure may be combined partially or totally. As will be clearly appreciated by those skilled in the art, technically various interactions and operations are possible. Various exemplary embodiments can be practiced individually or in combination.

Herein, the type of the device for recommending music in a playlist according to exemplary embodiments of the present disclosure is not particularly limited as long as it can play a plurality of music tracks. For example, a device for recommending music in a playlist may include a general purpose computer, a laptop computer, a network-connected storage, a streaming server, a mobile device (e.g., an MP3 player, a tablet device, a smartphone), etc. In addition, the software for playing tracks installed in the device is not particularly limited as long as it can provide tracks as a playlist, and may include a music streaming application, a application for playing stored music, etc. Hereinafter, for convenience of description, the device for recommending music in a playlist will be described as a mobile device in which a music streaming application is installed. However, it is to be understood that the device is not limited to it and may be implemented as a variety of devices.

Herein, a track may refer to a unit of continuous sound data representing one piece of music or sound. For example, a track may refer to a sound file. In the following description, a track is described as a unit representing a piece of music. However, it is to be understood that a track is a unit containing sound data.

Hereinafter, exemplary embodiments of the present disclosure will be described in detail with reference to the accompanying drawings.

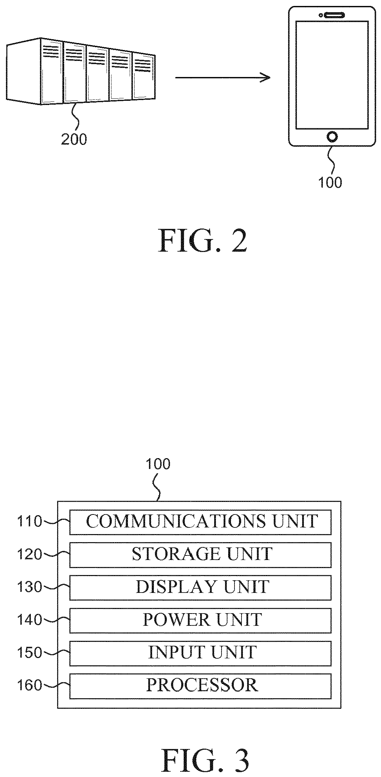

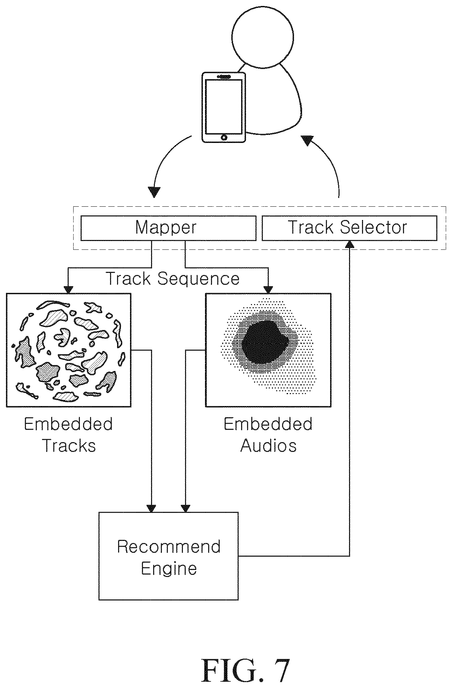

FIG. 2 is a view for illustrating a device for recommending music in a playlist according to an exemplary embodiment of the present disclosure. Referring to FIG. 2, a device 100 for recommending music in a playlist, which is represented by a mobile device, and a music streaming server 200 are shown. The device 100 for recommending music in a playlist may receive music from the music streaming server 200 and output the music through an audio output unit. The device 100 may request from the music streaming server 200 a playlist including a plurality of tracks and may request the server 200 to stream one of the tracks in the playlist. In response to the request, the music streaming server 200 may provide a piece of music. The device 100 may select a track to be included in the playlist and determine and provide at least one recommended track for the selected track. The recommended track may be determined using an engine configured to predict the next track to be played among potential tracks based on the order of the tracks in the playlist. The engine may be configured through learning with the order of tracks in a plurality of play lists as inputs. The learning method of the engine is not particularly limited. For example, the engine may be learnt by receiving a playlist including a plurality of tracks obtained from the music streaming server 200 or a plurality of users so that it predicts what track is included next to a particular track. The learning of the engine will be described below with reference to FIG. 7.

The device according to the exemplary embodiment of the present disclosure can facilitate to create a new playlist with high satisfaction by way of providing a track that is similar to the selected track and is likely to be preferred by the user as the recommended track.

FIG. 3 is a block diagram for illustrating a device for recommending music in a playlist according to an exemplary embodiment of the present disclosure. The device 100 for recommending music in a playlist includes a communications unit 110, a storage unit 120, a display unit 130, a power unit 140, an input unit 150 and a processor 160.

The communications unit 110 connects the music streaming server to the device 100 for recommending music in a playlist so that they can communicate with one another. In addition, the communications unit 110 may request the music streaming server for meta data such as the genre, album, release year and artist of a track, audio data, sound data, album cover data, lyric data and music video data, or may request to play tracks in real-time. The communications unit 110 may receive various data items provided in response to the request.

The storage unit 120 may store data received through the communications unit 110, a created playlist, and the data associated with tracks in the playlist. In addition, the storage unit 120 may store the engine for recommending tracks, and an application for creating a playlist including a recommended track. In addition, the storage unit 120 may store the track received from the music streaming server in the storage unit 120 as caches.

The display unit 130 displays an interface of an application for selecting tracks and providing recommended tracks in creating a playlist. The display unit 130 is a display device including a liquid-crystal display device, an organic light-emitting display device, and the like. The display unit 130 displays the interface of the application to a user. When the device 100 for recommending music in a playlist includes a touch screen panel, the touch screen panel may be attached on the display unit 130. The display unit 130 may be implemented in various forms or methods other than those listed above, as long as it can achieve the objects of the present disclosure. The power unit 140 may supply power to the device 100 for recommending music in a playlist.

The input unit 150 may be, but is not limited to, a keyboard, a mouse, a touch screen panel, and the like. The tracks to be included in the playlist may be selected through the input unit 150, and a command may be made to select and add one of the plurality of recommended tracks provided based on the selected tracks through the input unit 150. Although not shown in FIG. 3, the device 100 may further include an audio output unit for outputting a preview track.

The processor 160 is operatively connected to the communications unit 110, the storage unit 120, the display unit 130, the power unit 140, and the input unit 150 and executes various commands for operating applications. Hereinafter, an operation for providing a recommended track in a playlist will be briefly described. The processor 160 receives a track to be added to a playlist through the input unit 150. Subsequently, a track predicted as being played next to the selected track is determined by using the engine configured to predict a track to be played next among the potentially addable tracks. The determined track is provided on the display unit 130 as a recommended track.

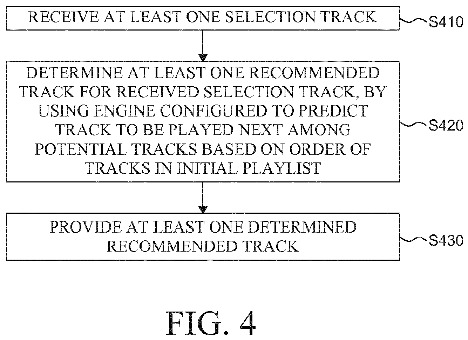

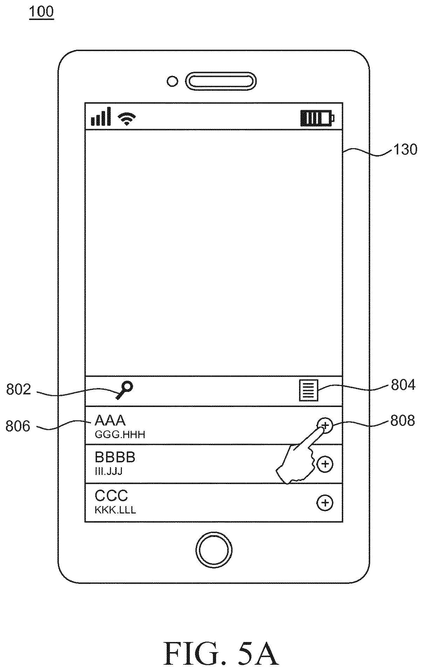

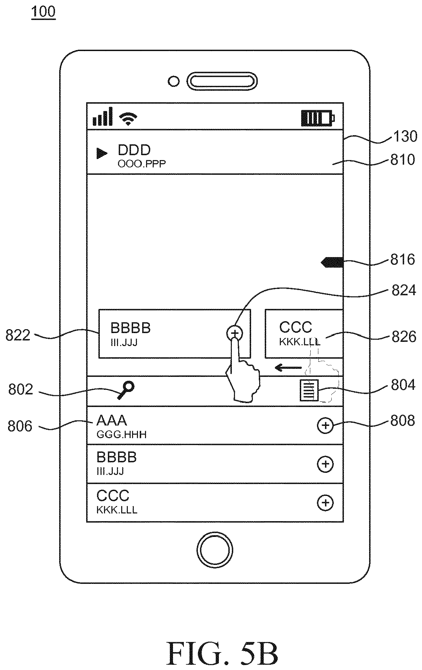

Hereinafter, a method for recommending a track will be described in detail with reference to FIG. 4. FIG. 4 is a flowchart for illustrating a method for recommending music in a playlist according to an exemplary embodiment of the present disclosure. FIGS. 5A and 5B are views for illustrating a user interface for creating a playlist according to a method for recommending music in a playlist according to an exemplary embodiment of the present disclosure. For convenience of illustration, description will be made with reference to the elements shown in FIG. 3.

Initially, at least one selected track is received (step S410). For example, a request for creating a playlist may be received by a music application, and tracks that can be added to the playlist may be displayed so that they can be selected. The user may select a track in the existing playlist or may search for a track to select it. Hereinafter, the selected track is referred to as a selection track. The selection track may be the basis for recommending the next track. In various embodiments, one of the tracks in the existing playlist may be received as a selection track if no selection track is received. That is, it is to be understood that the selection track is not limited to a track directly input by the user, but may also include a track that is randomly input or automatically selected by other conditions.

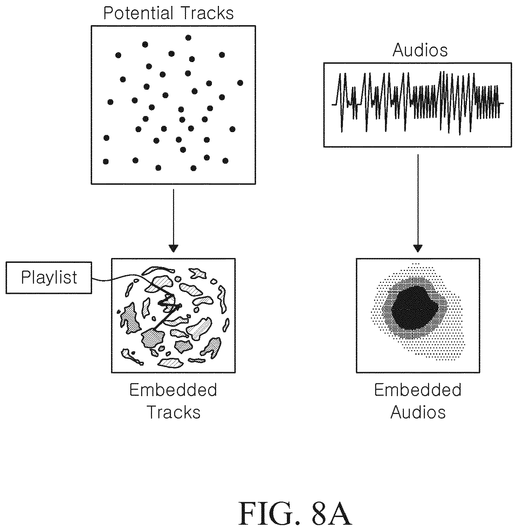

Referring to FIG. 5A, the display unit 130 displays a graphical user interface (GUI) for selecting tracks included in a playlist. The upper part of the GUI displays a selected track, and the lower part of the GUI selects a track. At the lower part of the screen, there may be a button 802 for triggering a search for a track, and a button 804 for displaying a list of tracks which have already been selected. In addition, tracks 806 which are searched for or included in the list are displayed, and a button 808 for adding the tracks 806 to the playlist is also displayed. In FIG. 5A, one of the tracks 806 may be selected via a touch screen. The selected track may be played. For example, when a user's touch is received via the touch screen and the button 802 is selected, a search window for receiving a query may be displayed. When the button 804 is selected, the tracks in the existing playlist may be displayed. On the other hand, if the displayed track 806 is selected via the touch screen, a preview voice for the track 806 may be output. The track 806 is not added to the list simply by selecting it. Referring to FIG. 8A, when a button 808 for adding the track to the playlist is selected via the touch screen, the track 806 is added to the playlist and the track 806 added to the list is displayed on the upper part of the display unit 130.

Subsequently, at least one recommended track for the received selection track is determined by using an engine configured to predict the track to be played next among the potential tracks based on the order of the tracks in the playlist (step S420). The potential tracks may include all the tracks accessible from the music streaming server. Alternatively, the potential tracks may be some of all the tracks accessible from the music streaming server. When the potential tracks are some of all the tracks accessible from the music streaming server, for example, a track having a degree of popularity above a certain level or a track appeared in the playlist more than a predetermined number of times may be selected as the potential tracks.

By predicting the track to be played next based on the order of the tracks in the playlists, it is possible to recommend music with a tendency similar to the selected track to users. This recommendation manner is different from existing manners that recommend a track simply based on similar artists, genres and release years. According to the recommendation method, tracks are recommended based on the playlist actually created by users, and thus a higher user satisfaction can be provided than one provided by rote. In addition to achieving high user satisfaction, users can be provided with various tracks of similar tastes she/he have not been recognized yet.

Subsequently, at least one determined recommended track is provided (step S430). Referring to FIG. 5B, the display unit 130 displays a selection track 810 selected in FIG. 5A and added to the playlist. Like in the GUI shown in FIG. 5A, the tracks 806 may be added by the add button 808 through the search button 802 or the list display button 804. In FIG. 5B, a recommended track 822 is further displayed. The recommended track 822 is a track recommended based on the selection track 810 according to the recommendation manner according to the above-described exemplary embodiment of the present disclosure. That is, in the interface according to an exemplary embodiment of the present disclosure, the recommended track 822 may be displayed separately from the tracks 806 which are obtained by searching or previously used. The mark 816 may be an indicator for indicating the tracks in the playlist which are to be included in a preview track. For example, the track 810 above the mark 816 may be determined as being included in the preview track.

Once the recommended track 822 is selected by detecting a user's input on the touch screen, the recommended track may be played. If the recommended track add button 824 is selected in the same way, the recommended track 822 is added to the playlist. In addition to the recommended track 822, an additional recommended track 826 is displayed. For example, referring to FIG. 5B, when the user performs a swiping gesture on the touch screen, the focus may be shifted from the recommended track 822 to the additional recommended track 826. The additional recommended tracks 826 may be recommended in a manner similar to the recommended track 822 or by considering additional factors to diversify recommended tracks. For example, the additional recommended track 826 may be determined using the difference in the distance and/or the release year between the previously selected track and an embedded audio. In various embodiments, if the potential tracks are some of all the accessible tracks, then the additional recommended tracks 826 may be selected from among the rest of the tracks or a track closest to the recommended track 822 may be selected from among the tracks stored in the storage unit 120 with a cache.

In various embodiments, the additional recommended tracks 826 may be selected from among the tracks becoming issues. The user may be more interested in the tracks that are becoming recent issues. Thus far, although the tracks becoming recent issues can go viral on social media or video providing platforms, it is difficult to make such tracks accessible unless a user directly selects them in creating the playlist. Also, even if the tracks becoming recent issues are provided to the user, they have been selected by human labor, such as music curators.

In contrast, according to exemplary embodiments of the present disclosure, a track of a recent issue can be directly recommended while creating a playlist, such that a user can create an up-to-date playlist.

The method of recommending a track of a recent issue is not particularly limited. For example, a track may be recommended based on information collected from video providing platforms or social media platforms. More specifically, information such as a hash tag, a content title and a content description is collected from video providing platforms, social media platforms, or messaging platforms. Then, an artist name or a track name is extracted from the information, the level that the artist name or the track name is mentioned is determined, and a weight corresponding to the level is assigned to the artist or the track in accordance with a predetermined criterion. In this manner, an additional recommended track can be selected from among the potential tracks. Furthermore, the degree of popularity of a subject that mentions or exposes the artist name or track name may also be considered. For example, if a content provider of a social media that mentioned the artist name has a large number of followers, then it is highly likely to be a trend, and thus a higher weight may be assigned to the track or artist. Alternatively, for example, the additional recommended tracks may be selected according to the above-described trend reflection in the long-tail portion in the distribution of the music tracks played by users according to the long tail phenomenon.

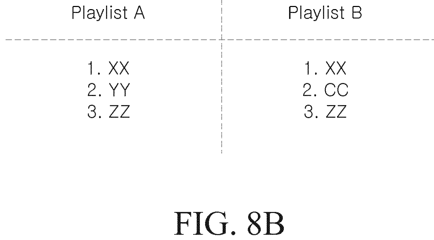

Referring back to FIG. 5B, if a track is selected from among the recommended track 822, the additional recommended track 826 and the tracks 806 by a user's input on the recommended track add button 824 on the touch screen, the selected track is added on the upper part of the GUI, and the above-described recommendation and selection of the track may be repeated. The playlist can be completed by selecting the tracks as shown in FIGS. 8A and 8B.

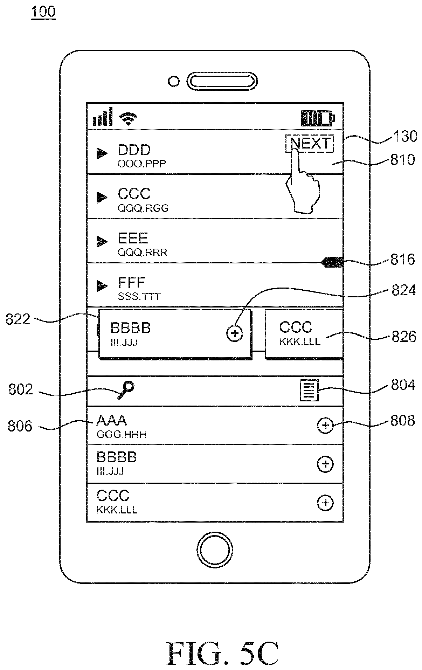

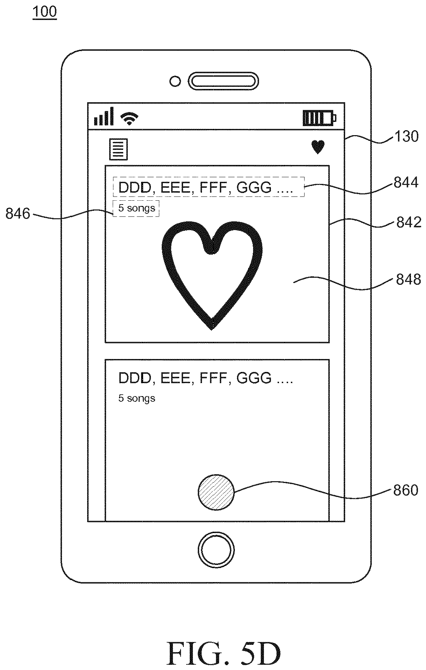

Next, the creation of the playlist will be described with reference to FIGS. 5C and 5D. Referring to FIG. 5C, a GUI is shown in which a plurality of tracks is added to a playlist by repeating recommendation and selection of tracks. The recommended track 822 and the additional recommended tracks 826 are continuously recommended based on the selected tracks. For example, when user input is made on a NEXT button on the touch screen, the creation of the playlist is completed such that the playlist including the selected tracks is created.

Referring to FIG. 5D, a plurality of playlists created by the above-described processes is displayed on the display unit 130. A playlists 842 may show an image of the playlist, the artists 846 included in the playlist, and the number of tracks in the playlist 856. When one of the playlists is selected on the GUI, a preview track created with the tracks included in the playlist may be played. When a playlist add button 860 is selected, step S410 may be carried out again to create a playlist.

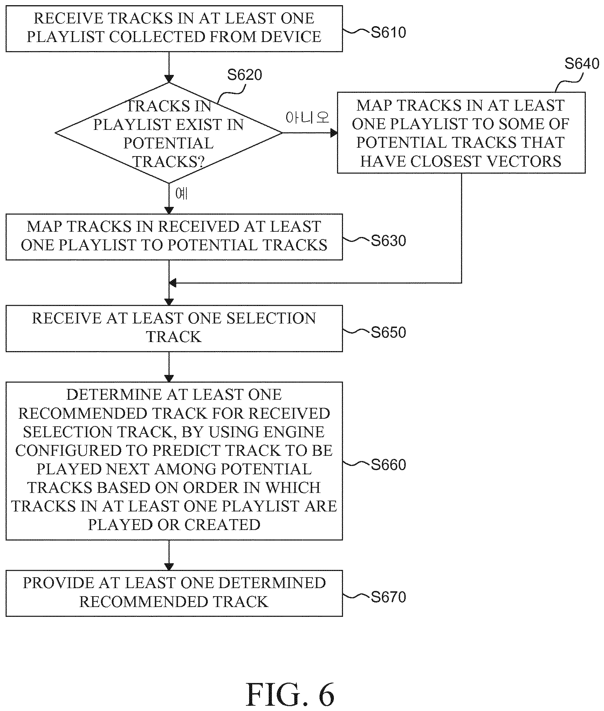

FIG. 6 is a flowchart for illustrating a method for recommending music in a playlist according to another exemplary embodiment of the present disclosure. FIG. 7 is a view for illustrating steps of mapping a playlist and receiving a recommended track among embedded tracks in a method for recommending music in a playlist according to another exemplary embodiment of the present disclosure;

Initially, tracks in at least one playlist collected from the device are received (step S610). The collected playlist is a playlist that the user used in the device for rectangular music in a playlist or used in various music applications. The collected playlist is used to determine a recommended track for the selected track in the engine configured to predict the next track to be played among the potential tracks based on the order of tracks in the playlist.

In order to apply the collected playlist to the engine, the received tracks in the at least one playlist has to be mapped to the potential tracks. In various embodiments, the potential tracks used in the engine may be outside the range of all accessible tracks. Accordingly, mapping considering this may be required.

Initially, it is determined whether the collected tracks in the playlist exist in the potential tracks (step S620). If the tracks exist in the potential tracks, the tracks in the playlist are mapped to the potential tracks (step S630). However, if the collected tracks in the playlist do not exist in the potential tracks, the tracks are mapped to one of the potential tracks that has the closest vector (step S640).

More specifically, the mapping process involves converting the collected tracks in the playlist into an embedded vector. The tracks in the playlist converted into the embedded vectors may be mapped to potential tracks having the same embedded vectors. Referring to FIG. 7, a mapper receives the tracks of the preference sequence, converts the received tracks into embedded tracks, and converts the received audios into embedded audios. The converted embedded tracks and embedded audios are mapped to potential tracks. The mapped embedded tracks and embedded audios may be used for an engine for recommending a track to be played next (Recommend Engine). If the tracks do not exist in the potential tracks, the track may be mapped to the potential track having a vector closest to the converted embedded vector, as described above. In addition, the audios of the collected tracks in the playlist may be converted into embedded audios. The tracks may be mapped to the potential tracks having embedded audios closest to the embedded audios. In various embodiments, the tracks to be converted may be tracks stored in a cache or tracks received from the streaming server upon request.

In various embodiments, before the at least one recommended track is determined, non-preferred tracks that are determined based on the user's behavior pattern may be received. The tracks added to the playlist by the user may be regarded, for example, as a preference sequence. According to an exemplary embodiment of the present disclosure, the engine may recommend tracks basically based on the preference sequence. However, a non-preference sequence may be additionally considered. The tracks included in the non-preference sequence may be excluded or may be assigned a low weight to reduce the probability of being recommended. Non-preference sequences or non-preferred tracks may be determined based on the user's behavior pattern. For example, the non-preferred tracks may include a track that is removed from a playlist by the user, a track that the user skips to the next track before a given period of time elapses or fast-forwards, and a track set to have a rating lower than a predetermined rating. It is to be noted that the non-preferred tracks may include all of the tracks that the user takes any action meaning that the user does not like it. The non-preferred track may be further considered in determining the recommended track to affect the selection of the recommended track.

Subsequently, at least one selection track is received (step S650). Although FIG. 6 illustrates that the selection track is received after the mapping of the potential tracks, this is merely illustrative. The selection track may be received simultaneously with or before the reception of the tracks in the playlist.

Subsequently, at least one recommended track for the received selection track is determined using the engine described above based further on the order in which the tracks in the at least one playlist are played or created (step S660). Referring to FIG. 7, when the engine determines a recommended track, a track may be selected by a track selector such as a module shown in FIG. 5B.

The order in which the tracks in the user's playlist are played or created may be used to predict the track to be played next to the selection track among the embedded tracks. The most recent tracks may be selected and considered among the tracks in the user's playlist. For example, when a plurality of playlists including 500 tracks is received, a predetermined number of tracks (for example, five) added last, or a predetermined number of tracks played last, may be selected and used for determining a recommended track.

In various embodiments, the received selection track may be converted to an embedded audio, and the distance between the converted embedded audio and the embedded audios of the potential tracks may be calculated. The calculated distance may be considered to determine at least one recommended track for the received selection track using the engine. For example, in selecting a recommended track from among a plurality of recommended tracks determined using the engine, a track having an embedded audio having closest to the embedded audio of the selection track may be determined as a recommended track.

Similarly, distances between at least one of the artists, genres and release years of the selection track and those of the potential tracks may be calculated. The calculated distance may be considered to determine at least one recommended track for the received selection track using the engine. For example, in selecting a recommended track from among a plurality of recommended tracks determined using the engine, a track that is closest to the selection track in terms of at least one of the artist, genre and the release year may be determined as a recommended track. Alternatively, in various embodiments, the embedded audio, the artist, the genre or the release year may be used as one dimension of the embedded vector. The determined recommended track is provided via the display unit (step S670) . Step S670 is substantially identical to step S430; and, therefore, the redundant description will be described omitted.

According to the method for recommending a track in a playlist according to another exemplary embodiment of the present disclosure, in creating a playlist, only if a user selects a track, it is possible to recommend a track that can satisfy the user's taste more accurately by analyzing the user's playlist and determining the audio similarity.

FIG. 8A is a view for illustrating learning by the engine in the method for recommending music in a playlist according to another exemplary embodiment of the present disclosure. FIG. 8B is a view for illustrating more easily how the engine recommends tracks in the method for recommending music in a playlist according to another exemplary embodiment of the present disclosure. Referring to FIGS. 8A and 8B, the learning process by the engine for recommending a track to be played next, which is employed in the present disclosure, will be described.

The engine may be configured, for example, based on a model for predicting the next song to listen when there are lately-listened, k songs in the order that they are listened, where k is an integer greater than zero. The model for predicting the next song to listen may be built by using, but is not limited to, a recurrent neural network. In this case, the learning may be performed with the playlists collected from music streaming servers, for example. If there are P playlists including M songs on average, (M - k - 1) × P learning data items may be obtained, where M and k are integers larger than zero, and M may be larger than k. For example, if M is equal to 20 and k is equal to 5, 14 learning data items may be obtained. If there are 1,000 playlists including 20 songs on average, 20,000 learning data items may be obtained. In other words, since the k songs are used as a criterion, a plurality of learning data items may be obtained from one playlist.

In the model, each track is represented by one vector, and the values of the vectors are learned on the condition that they are close to each other when tracks appear consecutively in a playlist and are distant from one another if tracks are not consecutively appear. By repeating the learning with the learning data items, the vector of a track is positioned close to a vector with a high degree of relevance (or a vector that is likely to have been played next). Therefore, the tracks having vectors close to one another may be highly likely to be recommended among them. In the model, each of the potential tracks, which are accessible tracks in the model, is represented by one vector, and the value of the vector is set to be closer if the track appears consecutively in the playlist, and is set to be distant if it does not appear consecutively in the playlist.

Referring to the left hand of FIG. 8A, the potential tracks are converted into embedded tracks (or vectors). Further, it may also be shown that consecutive embedded tracks in the playlist are connected with one another in the order. The learning process is carried out such that the connected vectors, i.e., the vectors consecutively appearing in the playlist have vector values close to one another, and the vectors that do not appear consecutively in the playlist or are distant from one another in the order have distant vector values.

Referring to the right hand of FIG. 8A, the audios of the tracks are converted into embedded audios. The converted embedded audios may be determined to be similar audios depending on the mutual distance, and the distance between the embedded audios may be subsiadiarily used to recommend a track.

Referring to FIG. 8B, the recommendation method based on the model can be understood more easily. For example, if playlist A includes tracks XX, YY and ZZ in this order, and playlist B includes XX, CC and ZZ in this order, it is learned that XX and YY, and XX and CC are closer. Therefore, when the track XX is selected as the selection track, the track CC, the track YY or a track possibly existing between the tracks CC and YY is determined as a recommended track. By repeating such learning process with playlists, it is possible to predict the tracks to be played next. Furthermore, since such predicted tracks are more likely to reflect the user's taste, a variety of playlist can be created with improved user experience.

Thus far, exemplary embodiments of the present disclosure have been described in detail with reference to the accompanying drawings. However, the present disclosure is not limited to the exemplary embodiments, and modifications and variations can be made thereto without departing from the technical idea of the present disclosure. Accordingly, the exemplary embodiments described herein are merely illustrative and are not intended to limit the scope of the present disclosure. The technical idea of the present disclosure is not limited by the exemplary embodiments. Therefore, it should be understood that the above-described embodiments are not limiting but illustrative in all aspects. The scope of protection sought by the present disclosure is defined by the appended claims and all equivalents thereof are construed to be within the true scope of the present disclosure.

## Claims

1. A method for recommending music in a playlist, the method comprising:
receiving at least one selection track;
determining at least one recommended track for the received selection track by using an engine, the engine configured to predict a track to be played next among potential tracks based on an order of tracks in a playlist; and
providing the at least one determined recommended track.

2. The method of claim 1, further comprising: before the determining the at least one recommended track, receiving tracks in at least one playlist collected from device, herein the determining the at least one recommended tracks comprises: determining at least one recommended track for the received selection track by using the engine, based further on an order in which the tracks are played or created in the at least one playlist.

3. The method of claim 2, further comprising: mapping the tracks in the received, at least one playlist to the potential tracks.

4. The method of claim 3, wherein if the tracks in the at least one playlist exist in the potential tracks, the tracks in the at least one playlist are mapped to the potential tracks, and wherein the mapping comprises converting the tracks into embedded tracks and mapping between the embedded tracks.

5. The method of claim 3, further comprising:
converting the tracks in the at least one playlist into vectors if the tracks in the at least one playlist do no exist in the potential tracks; and
mapping the tracks in the at least one playlist to some of the potential tracks that have vectors closest to the converted vectors.

6. The method of claim 5, wherein the tracks to be converted are tracks stored in a cache or tracks received from a streaming server upon request.

7. The method of claim 1, further comprising: before the determining the at least one recommended track, receiving non-preferred tracks determined based on behavior pattern of a user,
wherein the determining the at least one recommended tracks comprises: determining at least one recommended track for the received selection track by using the engine, based further on the non-preferred tracks.

8. The method of claim 7, wherein the behavior pattern of the user is one of removing a track from a playlist, skipping a track to a next track before a predetermined period of time elapses, and rating a track below a predetermined rating.

9. The method of claim 1, further comprising:
converting the received selection track to an embedded audio,
wherein the determining the at least one recommended track comprises: calculating a distance between the converted embedded audio and each of embedded audios of the potential tracks, and
wherein at least one recommended track for the received selection track is determined by using the engine, based further on the calculated distance.

10. The method of claim 1, wherein the determining the at least one recommended track comprises: calculating a distance between the selection track and each of the potential tracks in term of at least one of artist, genre and release year, and
wherein at least one recommended track for the received selection track is determined by using the engine, based further on the calculated distance.

11. The method of claim 1, wherein in the engine configured to predict a track to be played next among the potential tracks based on the order of the track in the playlist, each of the potential tracks is represented by one vector, and the value of the vector is set to be closer if tracks appear consecutively in the playlist while the value of the vector is set to be more distant if tracks do not appear consecutively in the playlist.

12. The method of claim 1, wherein the engine configured to predict a track to be played next among the potential tracks based on the order of the track in the playlist is learnt based on a plurality of playlists received from a music streaming server.

13. The method of claim 1, further comprising:
calculating a distance between the selection track and each of the potential tracks in term of at least one of artist, genre and release year; and
determining at least one additional recommended track with respect to the recommended track based on the calculated distance,
wherein the providing the recommended track comprises providing the recommended track along with the additional recommended track.

14. A device for recommending music in a playlist, comprising:
a communications unit configured to receive at least one selection track;
a processor operably connected to the communications unit and configured to:
acquire the at least one selection track from the communications unit, and
determine at least one recommended track for the received selection track using an engine, the engine configured to predict a track to be played next among potential tracks based on an order of tracks in the playlist;
a display unit configured to display the at least one recommended track; and
a touch input unit configured to select the at least one recommended track displayed on the display unit.

15. The device of claim 14, wherein the communications unit is further configured to receive tracks in at least one playlist collected from a device before the processor determines the at least one recommended track, and wherein the processor determines the at least one recommended tracks by determining at least one recommended track for the received selection track by using the engine, based further on an order in which the tracks are played or created in the at least one playlist.
